# EUROPEAN PATENT APPLICATION

(11) **EP 4 579 336 A1**
(43) Date of publication of application: **02.07.2025**
(21) Application number: 23220657.3
(22) Date of filing: 28.12.2023
(51) Int. Cl.: G03B 21/16, G03B 21/28, H04N 9/31

(54) **LIGHT PROJECTION DEVICE**

(71) Applicant: Plastic Omnium Lighting Systems GmbH, 80807 München (DE)
(72) Inventor: HUBER, Tobias, 80807 MUNICH (DE); DUSSAULT, David, 80807 MUNICH (DE); DOLLINGER, Benjamin, 80807 MUNICH (DE); ILIEV, Ilko, 80807 MUNICH (DE)
(74) Representative: LLR

(57) **Abstract**

The invention concerns an image projection device (15) comprising:
- a light source (24), preferably comprising a light-emitting diode,
- an optical engine (35) including a digital micromirror device (36), the optical engine (35) being configured to be fed by the light source (24) and containing data information corresponding to a main image (30), so as to project said main image along a predetermined light path. The main image is formed by the reunion of a first image and a second image, different from the first image, that are adjoined to each other.

The light projection device (15) further comprises an optical device (40) arranged on the light path of the main image (20) such that it receives the first image and the second image, and is configured to project said first image in a first direction and to project said second image in a second direction, different from the first direction.

## Description

The invention relates to the domain of the automotive industry, and particularly to a light projection device. In particular, the invention relates to a light projection device destined to display light patterns on exterior of the vehicle or interior surfaces of the vehicle.

Projections of images onto surfaces in automotive interiors are becoming increasingly attractive and are being used more and more by automobile manufacturers for individualization and design. Known projection devices allows to display different patterns on the left and right sides of the dashboard area or on other surfaces of the vehicle. Such projection devices can be placed at the dashboard level and project from it when in use. The projection system could also be placed at other locations in the vehicle such as the ceiling.

In order to project different images on each side of the vehicle, for example on each side of the dashboard, current solutions use a combination of several projection modules which are implemented in one housing. These solutions include several MLA (Multi-Lens-Array) arrangements with several individual projection units, several light-emitting diodes (LED) arrangements within a single housing. Indeed, in order to project left and right onto the dashboard, two projection modules which have a corresponding projection direction and deflection are used.

The current solutions present several disadvantages. First, using at least two projection units, along with several LEDs arrangements and multiple optical devices such as lenses or mirrors within a single housing make the whole device very large, and thus difficult to integrate inside a dashboard, especially when said dashboard is thin. Yet, automobile manufacturers are increasingly reducing the thickness of dashboards for design purposes. Moreover, multiplying the number of units necessarily increases the costs of the whole arrangement. Finally, increasing the number of light sources and electronic devices makes thermal management more complex.

There is therefore a need to provide a light projection device that overcomes the aforementioned drawbacks.

To that end, the invention proposes a light projection device for a motor vehicle, comprising:
- a light source, preferably comprising light-emitting diodes,
- an optical engine including a digital micromirror device, the optical engine being located downstream of the light source and containing data information corresponding to a main image so as to project said main image along a predetermined light path,
**characterized in that** the light projection device further comprises an optical device arranged on the light path of the main image such that it receives the main image, and configured to project a first portion of the main image as a first image in a first direction and to project a second portion of the main image as a second image in a second direction, different from the first direction.

According to a preferred embodiment, the optical engine is configured so as to form the main image as the reunion of the first image and the second image, that are adjoined to each other.

According to a preferred embodiment, the optical engine is configured so that the second image is different from the first image.

A digital micromirror device (DMD) should be understood as a device including multiple mirrors arranged on a single chip arranged in an array which correspond to the pixels in the image to be displayed. It can display white or colour images, or video streams. Owing to the fact that the main image of the light projection device is formed by the reunion of a first image and a second image, different from the first image, that are adjoined to each other, and the fact that this image is split into two different, independent images by an optical device, it is possible to use a single light source, and a single optical engine and a single DMD in a single housing to project two different, independent images on two different surfaces. This allows reducing the number of components, and thus reducing the overall volume of the device. The light projection device can therefore easily be integrated within a dashboard or ceiling unit for example. This also makes the device cheaper. The reduction of light sources and electronic devices also makes thermal management much easier.

According to a preferred embodiment, the optical engine is configured so that the main image comprises a dead zone where no pixels are lit, said dead zone being located between the first and second image and delimiting said first and second images. This facilitates the distinction between the first and second images and thus their direction into two different directions.

Preferably, to simplify the device and thus reduce its size and price, the optical devices comprises at least one lens, prism and/or mirror.

According to a particular embodiment, the light projection comprises:
- a first optical device arranged on the light path of the main image such that that it receives the first image and configured to project said first image in a first direction, and
- a second optical device arranged on the light path of the main image such that it receives the second image and configured to project said second image in a second direction different from the first direction.

According to a particular embodiment well adapted to the projection of images on either side of the interior of a motor vehicle, the first and second directions are opposite directions.

According to a particular embodiment well adapted to the projection of images in the interior of a motor vehicle, the optical device is configured to project the first image onto a first projection surface and the second image onto a second projection surface.

According to a particular embodiment well adapted to the projection of images in the inside of a motor vehicle in a symmetrical or asymmetrical way, the first projection surface is parallel to the second projection surface.

Preferably, to facilitate the split of the main image, the optical engine is configured so that the first image and the second image are adjoined to each other sensibly in a central zone of the main image.

To further facilitate the split of the main image, the optical engine is configured so that the dead zone is located in the central zone of the main image.

Preferably, in order to evacuate the heat generated by the light projection device, it is encased in a housing that includes a thermal management device, preferably a heatsink made of metal, for example aluminium.

The invention is also directed to a ceiling unit of a motor vehicle comprising a light projection device according to the invention, characterized in that the light projection device projects from the ceiling unit.

The invention is also directed to a dashboard for a motor vehicle comprising a light projection device according to the invention, characterized in that the light projection device projects from the dashboard and can be retracted inside the dashboard.

Preferably, in order to project images on either side of the dashboard as required by automobile manufacturers, the dashboard comprising a top surface visible by a user inside the vehicle, the light projection device is arranged sensibly in a central zone of the top surface and the first image and second image projected by the light projection device are projected respectively on opposing sides of the top surface and/or the light projection device.

The invention is also directed to a motor vehicle comprising a light projection device according to any one of the preceding claims.

### Brief description of the Figures

The invention will be better understood upon reading the following description, which is given only as an example and is made with reference to the attached drawings in which:
- Figure 1 is a schematic perspective view of an automotive vehicle dashboard comprising a light projection device according to a first embodiment of the invention;
- Figure 2 is a cross section of a light projection device of Figure 1 according to a first embodiment of the invention;
- Figure 3 is a view of an image fed to the light projection device of Figure 1;
- Figure 4 is a schematic view of the light projection device of Figure 1 ;

### Detailed Description

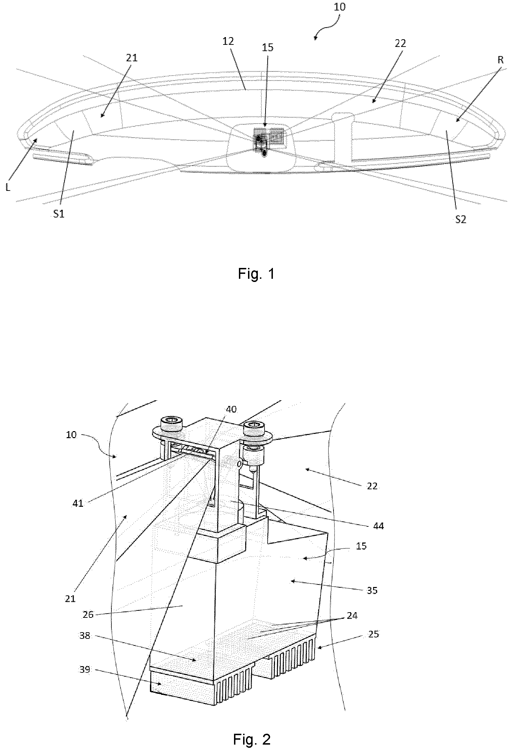

A vehicle dashboard 10 is depicted on Figure 1, and is for example destined to be located inside an automotive vehicle (not shown).

Vehicle dashboard 10 substantially extends along a longitudinal axis and comprises a top surface 12 comprising a left end L and a right end R. In the particular embodiment shown on Figure 1, vehicle dashboard 10 is substantially symmetrical with respect to an axis that is perpendicular to the longitudinal axis, such that its left end L and right R are substantially symmetrical. However, it should be noted that the invention is not limited to symmetrical dashboards, and can be applied to asymmetrical dashboard.

A light projection device 15 is located in a central zone of the top surface 12 of the dashboard 10, located substantially at an equal distance from both the left L and right R end.

Light projection device 15 projects from the dashboard 10 and can be retracted inside the dashboard 10. Light projection device 15 particularly projects from the top surface 12 of the dashboard 10.

The light projection device 10 is configured to project a first projected image 21 and second projected image 22 onto an imaging surface, which here is the top surface 12 of the dashboard. To be more precise, the first projected image 21 and the second projected image 22 are projected respectively on opposing sides of the dashboard. Here, first projected image 21 is projected upon left end L and second projected image 22 is projected upon right end R. However, in a variant (no shown), both first projected image 21 and second projected image 22 could be projected on the same side of the dashboard 10, but in different directions.

However, it should be noted that the light projection device 10 can also be arranged somewhere else inside the automotive vehicle. For example, it can be placed within a ceiling unit (not shown) of the vehicle, with the light projection device 10 projecting from the ceiling unit.

The light projection device 10 could also be arranged anywhere else inside the motor vehicle passenger compartment, for example projecting from an arm rest, one of the seats, inside walls, etc.

In other variants, the light projection device 10 could also be arranged outside the vehicle, for example protruding from any of the bodywork surfaces. In that case, the light projection device 10 could project images extending laterally beside the vehicle in a longitudinal direction of the vehicle and extending in a transverse direction of the vehicle 1 away from the vehicle 1. Alternatively, the image may extend from the rear of the vehicle, away from the vehicle in both the longitudinal and transverse directions of the vehicle.

First projected image 21 and second projected image 22 may be formed by the projection of a plurality of light pixels from a pixel matrix on the imaging surface 12. Here, considering the top surface 12 of the dashboard is a tri-dimensional curved dashboard (here slightly convex), imaging surface 12 is also slightly curved, but naturally depending on the shape of the dashboard it could be planar. In general, the imaging surface can have any shape, but includes a substantially planar zone.

The light projection device 15 shall now be described in a more precise manner referring to Figures 2 to 4.

Light projection device 15 comprises at least one light source 24 which comprises monochromatic light sources R, G, B of distinct colours, each generating a monochromatic light beam. For example, a light source 24 has three monochromatic light sources R, G, B, wherein a first monochromatic light source is a blue light source B, a second monochromatic light source is a yellow light source or a green light source G, and a third monochromatic light source is a red light source R. In particular, the second monochromatic light source is a green light source G. Each monochromatic light source R, G, B has preferably one wavelength or a wavelength comprised in a narrow spectral region, for example a 100 nm value range. For example, the red light source R has a wavelength comprised between 600 nm and 700 nm, the green light source has a wavelength comprised between 500 nm and 600 nm, and the blue light source B has a wavelength comprised between 400 nm and 500 nm. Preferably, the light source comprises at least one light emitting diode (LED). However, in an alternative embodiment, a light source 24 could also include a single white colour, in the form of a single white LED for example.

Here, the light projection device 15 comprises at least one light source 24, preferably a light-emitting diode (LED). In the particular embodiment shown on the Figures, it comprises three light sources 24, in particular three LEDs. The number and type of light sources can vary.

To evacuate the heat generated by those light sources 24, they are preferably arranged on thermal management devices in the form of an LED heat sink 25. Preferably, the LED heat sink 25 is part of a housing 26 in which the light sources 24 are housed. However, LED heat sink 25 may also be connected to housing 26, for example by screwing, gluing, or welding. The LED heat sink 25 is preferably made of metal, for example made of aluminium. It preferably comprises fins which provide for a better heat exchange with the surrounding environment.

The light projection device 15 also comprises an optical engine 35 generating a main image 30. In the particular embodiment shown on the Figures, optical engine 35 is also housed within housing 26. The optical engine 35 is located downstream of the light sources 24. It contains data information corresponding to a main image so as to project said main image along a predetermined light path.

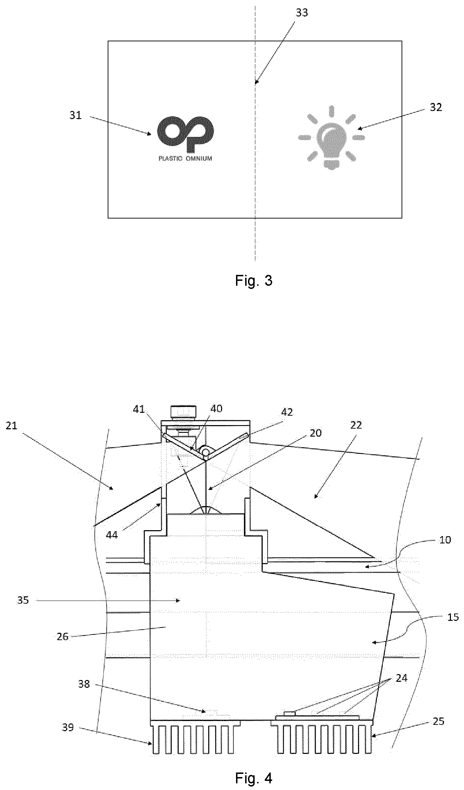

The main image 30 generated by the optical engine 35 is formed by the reunion of a first image 31 (shaped as the two letters "OP") and a second image 32, different from the first image 31 (here a light bulb) that are adjoined to each other, as can be seen on Figure 3.

Preferably, to facilitate the further split of the main image 30 as will be explained later on, the first image 31 and the second image 32 are adjoined to each other sensibly in a central zone of the main image 30.

The main image 30 comprises a dead zone 33 where no pixels are lit. The dead zone 33 is located between the first 31 and second image 32 and delimits said first 31 and second images 32.

The optical engine 35 is arranged downstream of said monochromatic light beams generated by the light sources 24 and generates a monochromatic projected main images 20, schematically represented in the shape of a cone emitted from the optical engine 35 on Figure 4. It can be made of a pixel matrix for each monochromatic light source R, G, B via the at least one-pixel matrix generating element (not shown).

The optical engine 35 preferably includes a digital micromirrors (DMD) matrix device, which, herein is in the form of a DMD chip 38. In the embodiment shown on the Figures, the vehicle light projection device 15 comprises only one digital micromirror chip 38. The DMD chip 38 is located proximate to a thermal management device, in the form of a DMD heat sink 39, which is either part of the housing 26 of the light projecting device 15, or connected to said housing 26, for example by gluing, screwing, or welding. The DMD heat sink 39 is for example made of aluminium.

Furthermore, the light projection device 15 comprises at least one optical device 40 arranged on the light path of the main projected main image 20 such that it is configured to project said first image 31 in a first direction, and to project said second image 32 in a second direction, different from the first direction. The optical device 40 is housed within a separating unit 44 which is located downstream of the optical engine 35.

To be more precise, the projected main image 20 is split into the first projected image 21 and the second projected image 22. The presence of the dead zone 33 facilitates such a split of the main image 30, hence its location in the central zone of the main image where the first and second images 32 are adjoined.

Here, the first direction is the direction towards the left of the Figure 4. It corresponds to the direction from the light projection device 15 towards the left end L of the dashboard 10. The second direction here corresponds to the direction from the light projection device 15 towards the left end R of the dashboard 10.

Hence, in this particular embodiment, the first and second directions are opposite directions. However, in other variants (not shown), the first and second directions could form an angle between them under 180°.

The optical device 40 is arranged downstream of the optical engine 35 and configured to project the first and second images 31, 32 on respective imaging surface S1, S2.

More particularly, the optical device 40 is configured to project the first image 31 onto a first projection surface S1, thus generating the first projected image 21, and to project the second image 22 onto a second projection surface S2, thus generating the second projected image 22. Here the first projection surface S1 and the second projection surface S2 are on opposite sides of the dashboard.

Preferably, to simplify the device and thus reduce its size and price, the optical device 40 comprises at least one lens, mirror and/or prism.

According to a particular embodiment shown on Figure 4, the optical device 40 comprises a first optical device 41 arranged on the light path of the main image 30 such that that it receives the first image 31 and is configured to project the first image 31 in a first direction, and a second optical device 42 arranged on the light path of the main image 30 such that it receives the second image 32 and is configured to project said second image 21 in the second direction.

According to a particular embodiment well adapted to the projection of images in the inside of a motor vehicle in a symmetrical way, the first projection surface S1 is parallel to the second projection surface S2.

### List of references

10: Dashboard
12: Top surface of the dashboard
15: Light projection device
20: Projected main image
21: First projected image
22: Second projected image
24: Light sources (LEDs)
25: LED heat sink
26: Housing of the optical engine
30: Main image
31: First image
32: Second image
33: Dead zone
35: Optical engine
38: DMD chip
39: DMD heat sink
40: Optical device
41: First optical device
42: Second optical device
44: Separating unit
L: Left side of the dashboard
R: Right side of the dashboard
S1: First projection surface
S2: Second projection surface

## Claims

1. A light projection device (15) comprising:
- a light source (24), preferably comprising light-emitting diodes,
- an optical engine (35) including a digital micromirror device (38), the optical engine (35) being located downstream of the light source (24) and containing data information corresponding to a main image (30) so as to project said main image (30) along a predetermined light path,
**characterized in that** the light projection device (15) further comprises an optical device (40) arranged on the light path of the main image (30) such that it receives the main image (30), and configured to project a first portion of the main image (30) as a first image (31) in a first direction and to project a second portion of said main image (30) as a second image (32) in a second direction, different from the first direction.

2. A light projection device (15) according to claim 1, wherein said optical engine (35) is configured so as to form the main image (30) as the reunion of the first image (31) and the second image (32), that are adjoined to each other.

3. A light projection device according to claim 2, wherein said optical engine (35) is configured so that the second image (32) is different from the first image (31).

4. A light projection device (15) according to any one of the preceding claims, wherein the optical engine (35) is configured so that the main image (30) comprises a dead zone (33) where no pixels are lit, said dead zone being located between the first (31) and second image and (32) delimiting said first (31) and second (32) images.

5. A light projection device (15) according to claim 1 or 2, wherein the optical device (40) comprises at least one lens, prism and/or mirror.

6. A light projection device (15) according to any one of the preceding claims, **characterized in that** it comprises:
- a first optical device (41) arranged on the light path of the main image (30) such that that it receives the first image (31) and configured to project said first image (31) in a first direction, and
- a second optical device (42) arranged on the light path of the main image (30) such that it receives the second image (32) and configured to project said second image (32) in a second direction different from the first direction, preferably opposite to the first direction.

7. A light projection device (15) according to any one of the preceding claims, wherein the optical device (40) is configured to project the first image (31) onto a first projection surface (S1) and the second image onto (32) a second projection surface (S2), preferably parallel to the first projection surface (S1).

8. A light projection device (15) according to any one of the preceding claims, wherein the optical engine (35) is configured so that the first image (31) and the second image (32) are adjoined to each other sensibly in a central zone of the main image (30).

9. A light projection device (15) according to claims 4 and 8 taken in combination, wherein the optical engine (35) is configured so that the dead zone (33) is located in the central zone of the main image (30).

10. A light projection device according (15) to any one of the preceding claims, wherein the light projection device (15) is encased in a housing (26) that includes a thermal management device, preferably a heatsink (25, 39) made of metal, for example aluminium.

11. A light projection device (15) according to any one of the preceding claims, wherein the light projection device (15) is configured to be placed within a motor vehicle interior.

12. A ceiling unit of a motor vehicle comprising a light projection device (15) according to any one of the preceding claims, wherein the light projection device (15) projects from the ceiling unit.

13. A dashboard (10) for a motor vehicle comprising a light projection device according to any one of the preceding claims, **characterized in that** the light projection device (15) projects from the dashboard (10) and can be retracted inside the dashboard (10).

14. A dashboard (10) for a motor vehicle according to claim 12, comprising a top surface (12) visible by a user inside the vehicle, **characterized in that** the light projection device (15) is arranged sensibly in a central zone of the top surface (12) and wherein the first image (31) and second image (32) are projected respectively by the light projection device (15) on opposing sides (L, R) of the top surface (12) and/or the light projection device (15).

15. A motor vehicle comprising a light projection device (15) according to any one of the preceding claims.
